# EUROPÄISCHE PATENTANMELDUNG

(11) **EP 4 234 194 A1**
(43) Veröffentlichungstag der Anmeldung: **30.08.2023**
(21) Anmeldenummer: 22158240.6
(22) Anmeldetag: 23.02.2022
(51) Int. Cl.: B29C 41/42, B29C 33/30, B29C 41/14, B29C 41/34, A41D 19/00, B29C 37/00, B29C 33/44

(54) **VORRICHTUNG ZUM ABSTREIFEN EINES ELASTISCHEN TAUCHARTIKELS**

(71) Anmelder: Faigle Kunststoffe GmbH, 6971 Hard (AT)
(72) Erfinder: Schrom, Michael, 6900 Bregenz (AT); Kienreich, Tobias, 6912 Hörbranz (AT)
(74) Vertreter: Torggler & Hofmann Patentanwälte - Rankweil

(57) **Zusammenfassung**

Vorrichtung (1) zum Abstreifen eines elastischen Tauchartikels (2), insbesondere Handschuhs, von einer Tauchform (3), wobei die Vorrichtung (1) einen Abstreifkeil (4) und einen Keilträger (5) aufweist und der Abstreifkeil (4) mit dem Keilträger (5) verbunden und abgewinkelt zum Keilträger (5) ausgerichtet ist, und wobei der Keilträger (5) ein Keilträgerdurchgangsloch (6) zum Hindurchführen einer Befestigungsschraube (7) aufweist, wobei der Keilträger (5) in einem Keilträgergehäuse (8) der Vorrichtung (1) schwenkbar und verschiebbar gelagert ist.

## Beschreibung

Die vorliegende Erfindung betrifft eine Vorrichtung zum Abstreifen eines elastischen Tauchartikels, insbesondere Handschuhs, von einer Tauchform gemäß des Oberbegriffs des Patentanspruchs 1.

Solche Vorrichtungen werden beim Stand der Technik auch als Gripper bezeichnet. Sie sind auf Halterungen angeordnet und werden von diesen an Tauchformen angedrückt, um damit auf der Tauchform ausgebildete Tauchartikel wie z.B. OP-Handschuhe und dergleichen von der Tauchform abzuziehen.

Gattungsgemäße Vorrichtungen sind z.B. in der US 10,092,047 B2 gezeigt. Die Vorrichtungen werden beim Stand der Technik mittels einer durch das Keilträgerdurchgangsloch hindurchgeschraubten Befestigungsschraube an der Halterung befestigt. In dem Keilträgerdurchgangsloch befindet sich beim Stand der Technik in der Regel ein Kugellager, welches ein Verschwenken des Keilträgers samt Abstreifkeil um die Befestigungsschraube relativ zur Halterung zulässt. Hierdurch ist beim Stand der Technik bis zu einem gewissen Grad eine Ausrichtung des Abstreifkeils an der Tauchform möglich. Trotzdem wird bei den Vorrichtungen gemäß des Standes der Technik im Dauerbetrieb eine relativ hohe Abnutzung beobachtet, sodass die Vorrichtung relativ oft ausgetauscht werden müssen.

Aufgabe der Erfindung ist es, eine Verbesserung der Vorrichtung der eingangs genannten Art vorzuschlagen, durch die die Abnützung am Abstreifkeil der Vorrichtung reduziert werden kann.

Zur Lösung dieser Aufgabe schlägt die Erfindung eine Vorrichtung gemäß Patentanspruch 1 vor.

Diese ist dadurch gekennzeichnet, dass der Keilträger in einem Keilträgergehäuse der Vorrichtung schwenkbar und verschiebbar gelagert ist.

Das Keilträgergehäuse kann dabei mittels der Befestigungsschraube fix an den Halterungen befestigt werden. Durch die schwenkbare und verschiebbare Lagerung des Keilträgers im Keilträgergehäuse der Vorrichtung kann sich der, vorzugsweise fix, mit dem Keilträger verbundene Abstreifkeil beim Andrücken der Vorrichtung an die Tauchform sehr gut an dieser ausrichten, sodass die Abnutzung am Abstreifkeil gegenüber dem Stand der Technik deutlich reduziert ist.

Erfindungsgemäße Vorrichtungen können auch als Gripper bezeichnet werden. Bei den Tauchartikeln kann es sich z.B. um Latex- oder Nitrilprodukte oder dergleichen handeln. Insbesondere handelt es sich um Handschuhe, welche z.B. im medizinischen Bereich und dergleichen eingesetzt werden können. Bevorzugte Varianten der Erfindung sehen vor, dass das Keilträgerdurchgangsloch im Keilträger ein Langloch ist. Hierdurch kann z.B. die Verschiebbarkeit des Keilträgers im Keilträgergehäuse der Vorrichtung erreicht werden. Günstig ist, wenn der Keilträger um das Langloch verschwenkbar und entlang des Langlochs verschiebbar im Keilträgergehäuse gelagert ist. Bevorzugte Varianten sehen vor, dass das Langloch in Richtung hin zum Abstreifkeil und in Richtung weg vom Abstreifkeil längserstreckt ist.

Um den Keilträger im Keilträgergehäuse elastisch vorgespannt lagern zu können, ist günstigerweise vorgesehen, dass die Vorrichtung zumindest ein elastisches Federelement aufweist, welches einerseits am Keilträger und andererseits am Keilträgergehäuse befestigt ist. Das Federelement ist dabei günstigerweise aus einem weicheren Material ausgebildet als der Keilträger und das Keilträgergehäuse. Man kann auch davon sprechen, dass der Keilträger und zumindest ein Teil des Abstreifkeils und auch das Keilträgergehäuse aus einer Hartkomponente und zumindest das elastische Federelement aus einer Weichkomponente ausgebildet sind. Für die Weichkomponente, also insbesondere die elastischen Federelemente, können z.B. Polyurethane oder thermoplastische Elastomere eingesetzt werden. Der Shorehärtebereich der Weichkomponente liegt bevorzugt in einem Bereich von 60 Shore A bis 54 Shore D gemäß DIN ISO 48-4:2021-02 (2021-02). Für die genannten Hartkomponenten können z.B. faserverstärkte Kunststoffe, insbesondere Polyolefine, Polyamide, Polyurethane oder Polyketone eingesetzt werden. Die Hartkomponente weist günstigerweise ein E-Modul im Bereich von 1000 MegaPascal bis 10.000 MegaPascal gemäß DIN EN ISO 527-1 (2019-12) auf.

Besonders bevorzugt ist vorgesehen, dass das zumindest eine elastische Federelement den Keilträger im unbelasteten Zustand des Abstreifkeils in einer Neutrallage hält, aus der der Keilträger heraus gegen die elastischen Rückstellkräfte des zumindest einen elastischen Federelements relativ zum Keilträgergehäuse schwenkbar und verschiebbar ist. Die elastischen Rückstellkräfte des zumindest einen elastischen Federelements sorgen einerseits für ein Festhalten des Keilträgers im unbelasteten Zustand des Abstreifkeils in der Neutrallage. Aus dieser Neutrallage heraus kann beim Andrücken des Abstreifkeils an die Tauchform eine elastische Auslenkung von Abstreifkeil und Keilträger relativ zum Keilträgergehäuse erfolgen. Hierdurch ergibt sich eine Dämpfung beim Andrücken des Abstreifkeils an die Tauchform, was den Abrieb am Abstreifkeil weiter reduziert und die Langlebigkeit der Vorrichtung somit positiv fördert. Durch die elastischen Rückstellkräfte des zumindest einen elastischen Federelementes werden auch weiche Anschläge für die Verschwenk- und/oder die Verschiebebewegung des Abstreifkeils samt Keilträgers relativ zum Keilträgergehäuse geschaffen. Günstigerweise wird dabei ein Verschiebeweg in einem Bereich zwischen 3 mm und 5 mm, vorzugsweise zwischen 3,4 mm und 4,6 mm des Keilträgers relativ zum Keilträgergehäuse ermöglicht. Günstig ist auch, wenn Verschwenkwinkel von 20° bis 30°, vorzugsweise von 24° bis 28°, für ein Verschwenken des Keilträgers relativ zum Keilträgergehäuse ermöglicht werden. Aus der Neutrallage heraus gesehen, ergeben sich somit Verschiebewege von +/- 1,5 mm bis 2,5 mm, vorzugsweise von +/- 1,7 bis 2,3 mm und Verschwenkwinkel von +/- 10° bis 15°, vorzugsweise von +/-12° bis 14°.

Das zumindest eine Federelement zwischen dem Keilträger und dem Keilträgergehäuse kann grundsätzlich auch geradlinig ausgebildet sein. Bevorzugte Varianten sehen aber vor, dass das zumindest eine elastische Federelement zumindest im unbelasteten Zustand zwischen seinen Befestigungen einerseits am Keilträger und andererseits am Keilträgergehäuse einen gebogenen Verlauf aufweist, um eine möglichst gleichmäßige elastische Verformung des Federelementes zu erreichen. Besonders bevorzugte Varianten sehen vor, dass das zumindest eine elastische Federelement zumindest einen um zumindest 90° gebogenen Bereich aufweist.

Die erfindungsgemäße Vorrichtung kann genau ein elastisches Federelement aber auch mehrere elastische Federelemente zwischen dem Keilträger und dem Keilträgergehäuse aufweisen. Eine bevorzugte Variante sieht vor, dass die Vorrichtung zwei elastische Federelemente aufweist, wobei die Befestigungen der elastischen Federelemente am Keilträger voneinander distanziert sind und die Befestigungen der elastischen Federelemente am Keilträgergehäuse voneinander distanziert sind. Eine andere bevorzugte Variante sieht vor, dass die Vorrichtung zwei elastische Federelemente aufweist, wobei die Befestigungen der elastischen Federelemente am Keilträger voneinander distanziert sind und die Befestigungen der elastischen Federelemente am Keilträgergehäuse zu einer gemeinsamen Befestigung zusammengeführt sind.

Das Keilträgergehäuse weist grundsätzlich bevorzugt zumindest einen offenen Bereich auf, durch den der Keilträger hindurchgeführt ist. Besonders bevorzugte Varianten sehen vor, dass das Keilträgergehäuse einen Gehäusegrundkörper und einen schwenkbar am Gehäusegrundkörper angeordneten Gehäusedeckel aufweist. Günstig ist es auch, wenn das Keilträgergehäuse zwei miteinander fluchtende Gehäusedurchgangslöcher zum Hindurchführen der durch das Keilträgerdurchgangsloch hindurchzuführenden Befestigungsschraube aufweist. Dabei kann eines der Gehäusedurchgangslöcher im Gehäusedeckel und ein anderes der Gehäusedurchgangslöcher im Gehäusegrundkörper angeordnet sein. Bevorzugte Varianten sehen vor, dass die Befestigungsschraube in der montierten Stellung durch die Gehäusedurchgangslöcher im Keilträgergehäuse und durch das vorzugsweise langlochförmig ausgebildete Keilträgerdurchgangsloch im Keilträger hindurchgeführt und an der Halterung angeschraubt ist. Hierbei kann einerseits das Keilträgergehäuse fix an der Halterung befestigt werden und andererseits der Keilträger im Keilträgergehäuse sowohl schwenkbar als auch verschiebbar gelagert sein. Die Gehäusedurchgangslöcher sind günstigerweise jeweils als kreisrunde Öffnungen ausgebildet. Um eine ungewünschte Relativbewegung zwischen Keilträgergehäuse und Halterung zu verhindern, sehen bevorzugte Varianten der Erfindung vor, dass das Keilträgergehäuse zumindest einen vom Keilträgergehäuse abstehenden Abstützfuß, vorzugsweise zwei vom Keilträgergehäuse abstehende Abstützfüße, zum Abstützen des Keilträgergehäuses an einer Halterung aufweist.

Der oder die Abstützfüße können dabei das Keilträgergehäuse an der Halterung abstützen, an der das Keilträgergehäuse befestigt ist. Vor allem können die Abstützfüße aber auch ein Verdrehen des Keilträgergehäuses relativ zur Halterung verhindern.

Weitere Merkmale und Einzelheiten der vorliegenden Erfindung werden nachfolgend anhand von erfindungsgemäßen Ausführungsbeispielen einer Vorrichtung bzw. eines Grippers erläutert. Dabei zeigen:
Fig. 1 bis 3 Darstellungen zur Verwendung der erfindungsgemäßen Vorrichtung zum Abstreifen eines elastischen Tauchartikels von einer Tauchform;
Fig. 4 bis 7 Darstellungen zu einem ersten erfindungsgemäßen Ausführungsbeispiel der Vorrichtung;
Fig. 8 bis 11 Darstellungen zu einem zweiten erfindungsgemäßen Ausführungsbeispiel einer Vorrichtung;
Fig. 12 die an einer Halterung befestigte erfindungsgemäße Vorrichtung in einem von der Tauchform abgehobenen Zustand und
Fig. 13 den Bereich A aus Fig. 12 vergrößert.

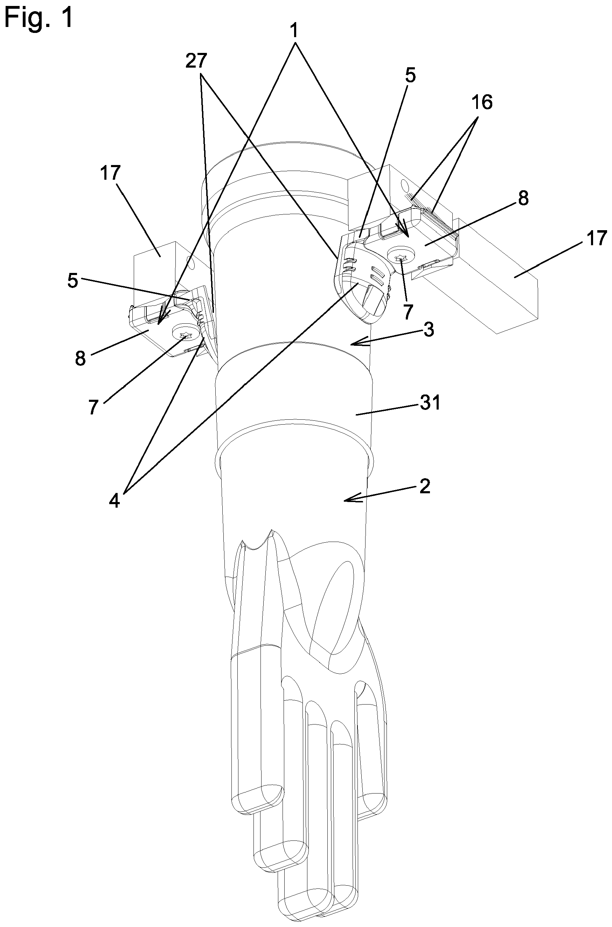

Fig. 1 zeigt in einer perspektivischen Darstellung von schräg unten eine Tauchform 3 auf der ein Tauchartikel 2 durch einen an sich bekannten Herstellungsprozess, z.B. aus Latex oder Nitril, ausgebildet ist. Im hier gezeigten Ausführungsbeispiel handelt es sich beim Tauchartikel 2 um einen Handschuh. Der Schaftabschnitt dieses Tauchartikels 2 weist einen umgeschlagenen Bereich 31 auf.

Zum Abstreifen des Tauchartikels 2 von der Tauchform 3 kommen nun zwei erfindungsgemäße Vorrichtungen 1 zum Einsatz. Diese sind jeweils an einer Halterung 17 mittels der Befestigungsschrauben 7 befestigt. Die Halterungen 17 werden von einem an sich bekannten, hier aber nicht dargestellten Antrieb so zur Tauchform 3 hin geschwenkt, dass die Abstreifkeile 4 der erfindungsgemäßen Vorrichtung 1 mit ihren Formanlageflächen 27 an der Tauchform 3 zur Anlage gebracht werden können. Es handelt sich bei den Vorrichtungen 1 um erfindungsgemäße Vorrichtungen zum Abstreifen eines elastischen Tauchartikels 2 von einer Tauchform 3, wobei die Vorrichtungen 1 jeweils einen Abstreifkeil 4 und einen Keilträger 5 aufweisen, wobei der Abstreifkeil 4 mit dem Keilträger 5 verbunden und abgewinkelt zum Keilträger 5 ausgerichtet ist. Der Keilträger 5 weist ein in Fig. 1 noch nicht sichtbares Keilträgerdurchgangsloch 6 zum Hindurchführen einer Befestigungsschraube 7 auf. Erfindungsgemäß ist vorgesehen, dass der Keilträger 5 der jeweiligen Vorrichtung 1 in einem Keilträgergehäuse 8 der Vorrichtung 1 schwenkbar und verschiebbar gelagert ist. Hierdurch kann sich der Abstreifkeil 4 beim Andrücken an die Tauchform 3 sehr gut relativ zu dieser ausrichten, sodass der bei einer Vielzahl von solchen Andrückvorgängen am Abstreifkeil 4 mit der Zeit entstehende Abrieb sehr gering gehalten werden kann und damit die Vorrichtung 1 sehr langlebig ist.

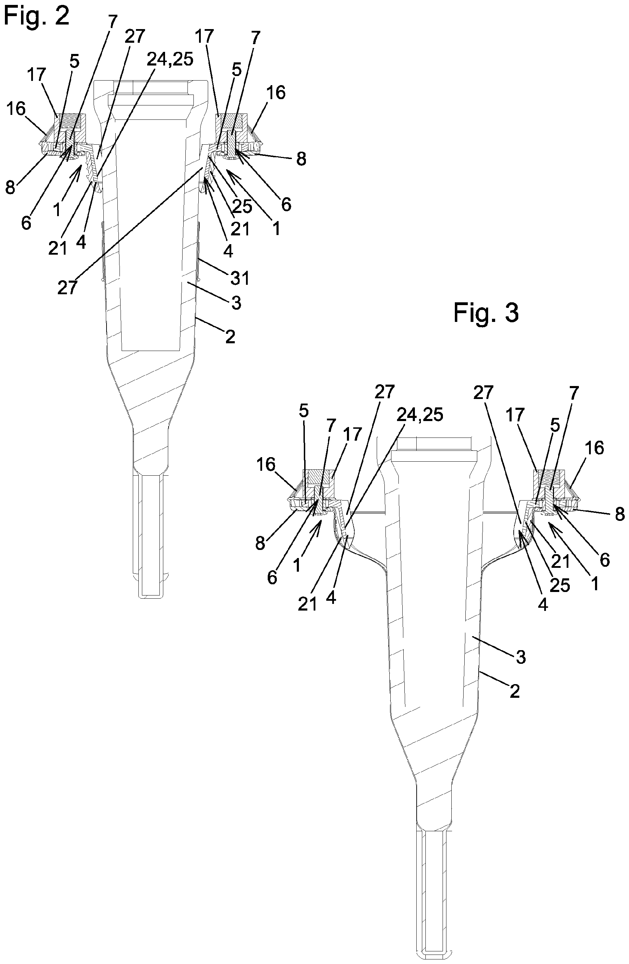

Fig. 2 zeigt in einem Längsschnitt die Situation kurz bevor die beiden Vorrichtungen 1 mit den Formanlageflächen 27 ihrer Abstreifkeile 4 zur Anlage an die Tauchform 3 kommen. Sind die Halterungen 17 mit den daran angeordneten Vorrichtungen 1 dann so weit aufeinander zu geschwenkt, dass die Abstreifkeile 4 an der Tauchform 3 anliegen, so werden an sich bekannte, hier nicht dargestellte, Düsen aktiviert, mit denen der umgeschlagene Bereich 31 des Tauchartikels 2 über die Abstreifkeile 4 der Vorrichtung 1 geblasen wird. Anschließend werden dann die Halterungen 17, so wie in Fig. 3 gezeigt, voneinander weg geschwenkt, sodass die an den Halterungen 17 fixierten Vorrichtungen 1 ebenfalls von der Tauchform 3 abgehoben werden und die Abstreifkeile 4 der Vorrichtung 1 den Tauchartikel 2, wie in Fig. 3 gezeigt, auseinanderziehen. Dann kann der Tauchartikel 2 durch eine entsprechende Relativbewegung von Tauchform 3 und Vorrichtungen 1 in einer Längsrichtung der Tauchform 3 von der Tauchform 3 abgezogen werden. Dieser Vorgang des Abstreifens des Tauchartikels 2 von der Tauchform 3 ist an sich bekannt und muss nicht weiter erläutert werden.

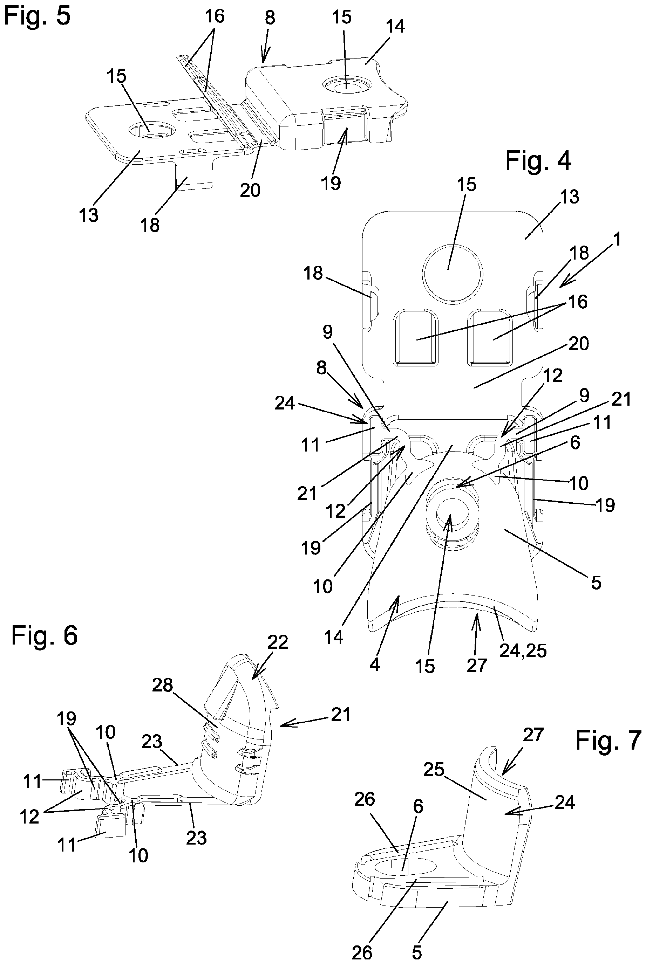

In den Fig. 4 bis 7 ist nun ein erstes Ausführungsbeispiel einer erfindungsgemäßen Vorrichtung 1 mit seinen verschiedenen Komponenten dargestellt. Fig. 4 zeigt das geöffnete Keilträgergehäuse 8 mit dem darin angeordneten Keilträger 5. Mit dem Keilträger 5 verbunden, ist in Fig. 4 zumindest der Keilgrundkörper 25 des Abstreifkeils 4 zu sehen. Der Keilträger 5 und der Keilgrundkörper 25 sind bevorzugt einstückig ausgebildet, sodass der Keilträger 5 und der Abstreifkeil 4 fix miteinander verbunden sind. Der Abstreifkeil 4 ist abgewinkelt zum Keilträger 5 ausgerichtet. Der Keilträger 5 mit dem Keilgrundkörper 25 ist günstigerweise ebenso als Hartkomponente 24 ausgebildet, wie auch das Keilträgergehäuse 8. In Fig. 4 ist auch das als Langloch ausgebildete Keilträgerdurchgangsloch 6 gut zu sehen, wie auch die Gehäusedurchgangslöcher 15 im Keilträgergehäuse 8. Der Keilträger 5 ist um das als Langloch ausgebildete Keilträgerdurchgangsloch 6 verschwenkbar und entlang dieses Langlochs auch verschiebbar im Keilträgergehäuse 8 gelagert. Dieses Langloch ist in Richtung hin zum Abstreifkeil 4 und in Richtung weg vom Abstreifkeil 4 längserstreckt ausgebildet.

Das in Fig. 5 aufgeklappt und einzeln dargestellte Keilträgergehäuse 8 weist einen Gehäusegrundkörper 13 und einen Gehäusedeckel 14 auf. Diese sind in diesem Ausführungsbeispiel mittels eines Filmscharniers 20 verschwenkbar miteinander verbunden. Um den Gehäusedeckel 14 am Gehäusegrundkörper 13 zu arretieren, sind am Gehäusegrundkörper 13 in diesem Ausführungsbeispiel Rasten 18 und am Gehäusedeckel 14 Rastaufnahmen 19 vorgesehen, welche bei einem entsprechenden Aufschwenken des Gehäusedeckels 14 auf den Gehäusegrundkörper 13 einrasten und so diese beiden Bauteile stabil miteinander verbinden. Die Rasten 18 und die Rastaufnahmen 19 können natürlich auch andersherum angeordnet sein. Sowohl im Gehäusegrundkörper 13 als auch im Gehäusedeckel 14 befindet sich jeweils ein Gehäusedurchgangsloch 15, welches wie eingangs erläutert, günstigerweise jeweils als eine kreisrunde Öffnung ausgebildet ist. In der fertig montierten Stellung des Keilträgergehäuses 8 in der der Gehäusedeckel 14 so weit auf den Gehäusegrundkörper 13 aufgeschwenkt ist, dass die Rasten 18 in den Rastaufnahmen 19 eingerastet sind, sind die beiden Gehäusedurchgangslöcher 15 miteinander fluchtend angeordnet, sodass jeweils eine Befestigungsschraube 7 durch diese Gehäusedurchgangslöcher 15 und auch durch das als Langloch ausgebildete Keilträgerdurchgangsloch 6 hindurchgeführt werden kann, um so das Keilträgergehäuse 8 an der jeweiligen Halterung 17 zu fixieren. Die in Fig. 5 gut sichtbaren, in diesem Ausführungsbeispiel am Gehäusegrundkörper 13 angeordneten Abstützfüße 16 liegen in der fertig montierten Stellung gemäß der Fig. 1 bis 3 an der jeweiligen Halterung 17 an und sorgen dafür, dass das Keilträgergehäuse 8 in seiner Position fix und unverrückbar an der Halterung 17 befestigt ist.

Betrachtet man nun wiederum Fig. 4, so sieht man, dass in bevorzugten Ausgestaltungsformen erfindungsgemäßer Vorrichtungen, wie der hier gezeigten, elastische Federelemente 9 vorgesehen sind, welche einerseits am Keilträger 5 und andererseits am Keilträgergehäuse 8 befestigt sind. Die elastischen Federelemente 9 können dazu genutzt werden, den Keilträger 5 im unbelasteten Zustand des Abstreifkeils 4 in einer, in Fig.4 gezeigten, Neutrallage zu halten, aus der der Keilträger 5 heraus gegen die elastischen Rückstellkräfte des zumindest einen elastischen Federelementes 9 relativ zum Keilträgergehäuse 8 schwenkbar und verschiebbar ist. Durch die elastischen Federelemente 9 wird somit einerseits eine Ausrichtung des Keilträgers und damit auch des Abstreifkeils 4 relativ zum Keilträgergehäuse 8 in einer Neutralstellung erreicht, sofern keine äußeren Kräfte wirken. Andererseits sorgen die elastischen Federelemente 9 aber auch für eine elastische Lagerung des Keilträgers 5 im Keilträgergehäuse 8. Durch diese elastische Lagerung wird ein Dämpfungseffekt beim Andrücken des Abstreifkeils 4 an die Tauchform 3 erzielt. Die elastischen Federelemente 9 sorgen auch für weiche Anschläge, sowohl bei einer Längsverschiebung des Keilträgers 5 relativ zum Keilträgergehäuse 8 als auch bei einem Verschwenken des Keilträgers 5 relativ zum Keilträgergehäuse 8. Die elastischen Elemente 9 sind mittels der Befestigung 10 am Keilträger 5 und mittels der Befestigung 11 am Keilträgergehäuse 8 befestigt. Zwischen den Befestigungen 10 und 11 haben die elastischen Federelemente 9, wie hier dargestellt, günstigerweise einen gebogenen Verlauf. Besonders bevorzugt weist jedes elastische Federelement 9, wie hier auch realisiert, zumindest einen um zumindest 90° gebogenen Bereich auf.

Das erste Ausführungsbeispiel ist eine Variante, bei der, wie in Fig. 4 gut zu sehen, vorgesehen ist, dass die Vorrichtung 1 zwei elastische Federelemente 9 aufweist, wobei die Befestigungen 10 der elastischen Federlemente 9 am Keilträger 5 voneinander distanziert sind und die Befestigungen 11 der elastischen Federlemente 9 am Keilträgergehäuse 8 voneinander distanziert sind.

Die elastischen Federelemente 9 sind günstigerweise, wie eingangs bereits erläutert, aus einem weicheren Material als der Keilträger 5 und auch das Keilträgergehäuse 8 ausgebildet. Man kann hier auch von einer Weichkomponente 21 sprechen.

Die elastischen Federelemente 9 können z.B. zunächst separat aus einem entsprechend weichen Material hergestellt und dann mittels der Befestigungen 10 und 11 am Keilträgergehäuse 8 und am Keilträger 5, wie in Fig. 4 gezeigt, befestigt werden. Wie in Fig. 6 gezeigt wird, kann aber auch vorgesehen sein, dass die elastischen Federelemente 9 über Verbindungsstränge 23 mit einer Keilauflage 22 des Abstreifkeils 4 verbunden ist. Die Keilauflage 22 könnte auch als Überzugkörper bezeichnet werden. Dabei können die elastischen Federelemente 9, die Verbindungsstränge 23 und auch die Keilauflage 22 einstückig miteinander verbunden und als Weichkomponente 21 ausgebildet sein. Solche Teile können z.B. in einem Stück als Spritzgussteile kostengünstig hergestellt werden. Die Oberfläche der Keilauflage 22 bildet die Abstreiffläche 28, auf der der Tauchartikel 2 zu liegen kommt, siehe insbesondere Fig. 3.

Das in Fig. 7 gezeigte Bauteil besteht aus dem Keilträger 5 und dem daran einstückig befestigten Keilgrundkörper 25. Der Keilgrundkörper 25 und der Keilträger 5 sind aus der eingangs bereits genannten Hartkomponente 24 ausgeführt. Auch das in Fig. 7 dargestellte Teil kann günstig im Spritzguss hergestellt werden. Im Keilträger 5 befindet sich das als Langloch ausgebildete Keilträgerdurchgangsloch 6. Darüber hinaus sind in diesem Ausführungsbeispiel des Keilträgers 5 die Kanäle 26 ausgebildet, in denen die Verbindungsstränge 23 zu liegen kommen, wenn die in Fig. 6 gezeigte Weichkomponente 21 mit der in Fig. 7 gezeigten Hartkomponente 24 verbunden wird.

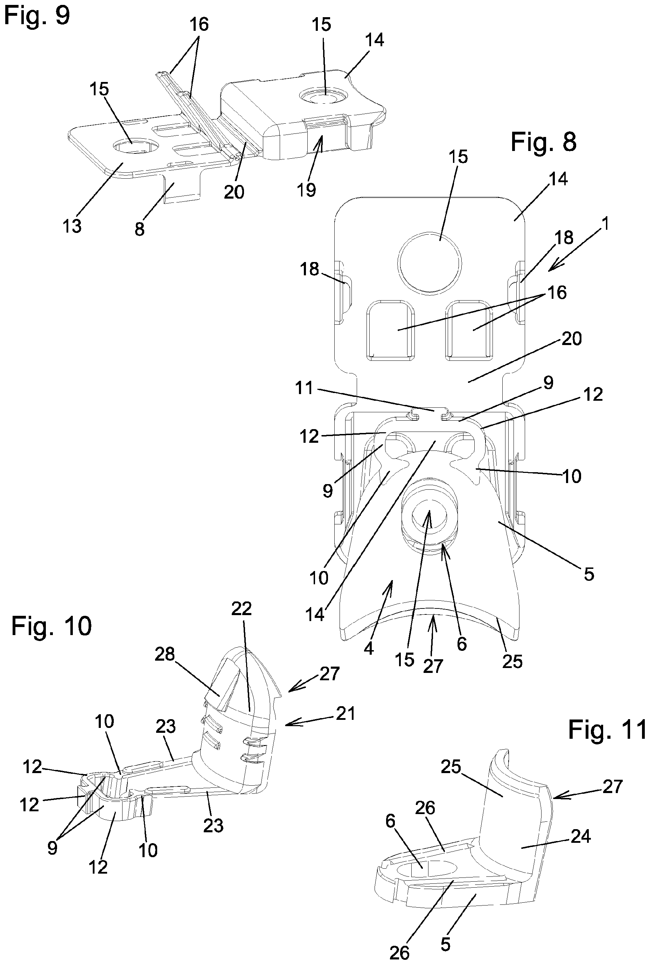

Die Fig. 8 bis 11 zeigen ein zweites Ausführungsbeispiel der Erfindung, wobei nur noch auf die Unterschiede zum ersten Ausführungsbeispiel gemäß der Fig. 4 bis 7 eingegangen wird. Ansonsten gilt die obige Beschreibung des ersten Ausführungsbeispiels entsprechend. Der Unterschied zum ersten Ausführungsbeispiel besteht in der Ausgestaltung und Befestigung der elastischen Federelemente 9. In diesem zweiten Ausführungsbeispiel ist, wie insbesondere in Fig. 8 zu sehen, vorgesehen, dass die Vorrichtung zwei elastische Federelemente 9 aufweist, wobei die Befestigungen 10 der elastischen Federlemente 9 am Keilträger 5 voneinander distanziert sind und die Befestigungen der elastischen Federlemente 9 am Keilträgergehäuse 8 zu einer gemeinsamen Befestigung zusammengeführt sind.

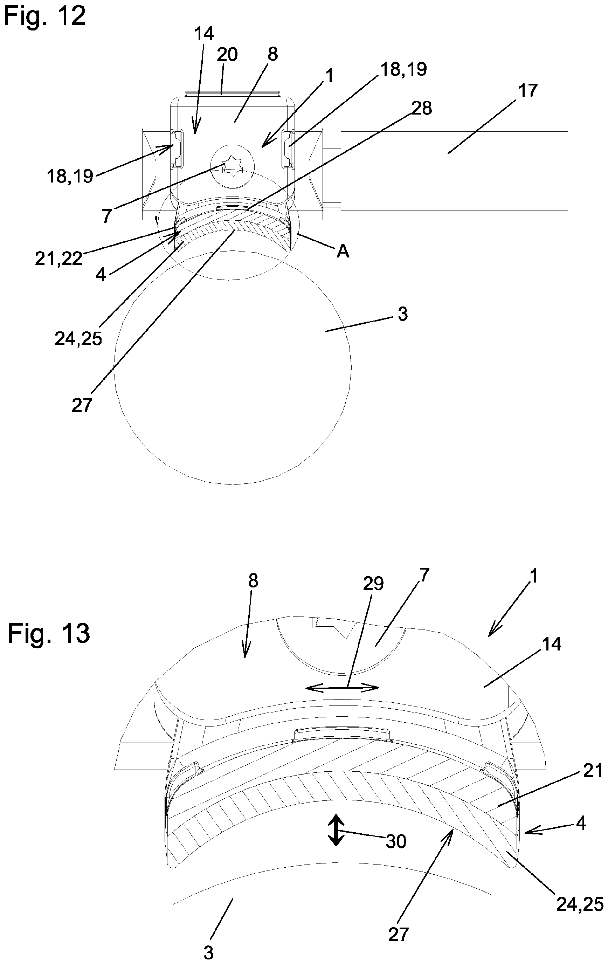

Fig. 12 zeigt noch einmal den fertig montierten Zustand in dem die erfindungsgemäße Vorrichtung 1 mittels der durch die Gehäusedurchgangslöcher 15 und das Keilträgerdurchgangsloch 6 hindurchgeführten Befestigungsschraube 7 an der Halterung 17 befestigt ist. Aus dem Keilträgergehäuse 8 steht der Keilträger 5 und der daran fix angeordnete Abstreifkeil 4 hervor. Der Keilgrundkörper 25 bildet die Formanlagefläche 27, mit der der Abstreifkeil 4 gegen die Tauchform 3 gedrückt wird. Fig. 13 zeigt den Bereich A aus Fig. 12 vergrößert. Hier sind noch einmal die Schwenkrichtungen 29 und die Verschieberichtungen 30 eingezeichnet, in denen der Keilträger 5 samt Abstreifkeil 4 relativ zum Keilträgergehäuse 8 verschwenkbar und verschiebbar ist.

**Legende zu den Hinweisziffern:**

| | | | |
|---|---|---|---|
| 1 | Vorrichtung | 28 | Abstreiffläche |
| 2 | Tauchartikel | 29 | Schwenkrichtung |
| 3 | Tauchform | 30 | Verschieberichtung |
| 4 | Abstreifkeil | 31 | umgeschlagener Bereich |
| 5 | Keilträger | | |
| 6 | Keilträgerdurchgangsloch | | |
| 7 | Befestigungsschraube | | |
| 8 | Keilträgergehäuse | | |
| 9 | elastisches Federelement | | |
| 10 | Befestigung | | |
| 11 | Befestigung | | |
| 12 | gebogener Bereich | | |
| 13 | Gehäusegrundkörper | | |
| 14 | Gehäusedeckel | | |
| 15 | Gehäusedurchgangsloch | | |
| 16 | Abstützfuß | | |
| 17 | Halterung | | |
| 18 | Raste | | |
| 19 | Rastaufnahme | | |
| 20 | Biegescharnier | | |
| 21 | Weichkomponente | | |
| 22 | Keilauflage | | |
| 23 | Verbindungsstange | | |
| 24 | Hartkomponente | | |
| 25 | Keilgrundkörper | | |
| 26 | Kanal | | |
| 27 | Formanlagefläche | | |

## Patentansprüche

1. Vorrichtung (1) zum Abstreifen eines elastischen Tauchartikels (2), insbesondere Handschuhs, von einer Tauchform (3), wobei die Vorrichtung (1) einen Abstreifkeil (4) und einen Keilträger (5) aufweist und der Abstreifkeil (4) mit dem Keilträger (5) verbunden und abgewinkelt zum Keilträger (5) ausgerichtet ist, und wobei der Keilträger (5) ein Keilträgerdurchgangsloch (6) zum Hindurchführen einer Befestigungsschraube (7) aufweist, **dadurch gekennzeichnet, dass** der Keilträger (5) in einem Keilträgergehäuse (8) der Vorrichtung (1) schwenkbar und verschiebbar gelagert ist.

2. Vorrichtung (1) nach Anspruch 1, **dadurch gekennzeichnet, dass** das Keilträgerdurchgangsloch (6) im Keilträger (5) ein Langloch ist.

3. Vorrichtung (1) nach Anspruch 2, **dadurch gekennzeichnet, dass** der Keilträger (5) um das Langloch verschwenkbar und entlang des Langlochs verschiebbar im Keilträgergehäuse (8) gelagert ist.

4. Vorrichtung (1) nach Anspruch 2 oder 3, **dadurch gekennzeichnet, dass** das Langloch in Richtung hin zum Abstreifkeil (4) und in Richtung weg vom Abstreifkeil (4) längserstreckt ist.

5. Vorrichtung (1) nach einem der Ansprüche 1 bis 4, **dadurch gekennzeichnet, dass** die Vorrichtung (1) zumindest ein elastisches Federelement (9) aufweist, welches einerseits am Keilträger (5) und andererseits am Keilträgergehäuse (8) befestigt ist.

6. Vorrichtung (1) nach Anspruch 5, **dadurch gekennzeichnet, dass** das zumindest eine elastische Federelement (9) den Keilträger (5) im unbelasteten Zustand des Abstreifkeils (4) in einer Neutrallage hält, aus der der Keilträger (5) heraus gegen die elastischen Rückstellkräfte des zumindest einen elastischen Federelements (9) relativ zum Keilträgergehäuse (8) schwenkbar und verschiebbar ist.

7. Vorrichtung (1) nach Anspruch 5 oder 6, **dadurch gekennzeichnet, dass** das zumindest eine elastische Federelement (9) zumindest im unbelasteten Zustand zwischen seinen Befestigungen (10, 11) einerseits am Keilträger (5) und andererseits am Keilträgergehäuse (8) einen gebogenen Verlauf aufweist.

8. Vorrichtung (1) nach einem der Ansprüche 5 bis 7, **dadurch gekennzeichnet, dass** das zumindest eine elastische Federelement (9) zumindest einen um zumindest 90° gebogenen Bereich (12) aufweist.

9. Vorrichtung (1) nach einem der Ansprüche 5 bis 8, **dadurch gekennzeichnet, dass** die Vorrichtung (1) zwei elastische Federelemente (9) aufweist, wobei die Befestigungen (10) der elastischen Federlemente (9) am Keilträger (5) voneinander distanziert sind und die Befestigungen (11) der elastischen Federlemente (9) am Keilträgergehäuse (8) voneinander distanziert sind.

10. Vorrichtung (1) nach einem der Ansprüche 5 bis 8, **dadurch gekennzeichnet, dass** die Vorrichtung (1) zwei elastische Federelemente (9) aufweist, wobei die Befestigungen (10) der elastischen Federlemente (9) am Keilträger (5) voneinander distanziert sind und die Befestigungen (11) der elastischen Federlemente (9) am Keilträgergehäuse (8) zu einer gemeinsamen Befestigung zusammengeführt sind.

11. Vorrichtung (1) nach einem der Ansprüche 1 bis 10, **dadurch gekennzeichnet, dass** das Keilträgergehäuse (8) einen Gehäusegrundkörper (13) und einen schwenkbar am Gehäusegrundkörper (13) angeordneten Gehäusedeckel (14) aufweist.

12. Vorrichtung (1) nach einem der Ansprüche 1 bis 10, **dadurch gekennzeichnet, dass** das Keilträgergehäuse (8) zwei miteinander fluchtende Gehäusedurchgangslöcher (15) zum Hindurchführen der durch das Keilträgerdurchgangsloch (6) hindurchzuführenden Befestigungsschraube (7) aufweist.

13. Vorrichtung (1) nach Anspruch 11 und 12, **dadurch gekennzeichnet, dass** eines der Gehäusedurchgangslöcher (15) im Gehäusedeckel (14) und ein anderes der Gehäusedurchgangslöcher (15) im Gehäusegrundkörper (13) angeordnet ist.

14. Vorrichtung (1) nach Anspruch 12 oder 13, **dadurch gekennzeichnet, dass** die Gehäusedurchgangslöcher (15) jeweils als eine kreisrunde Öffnung ausgebildet sind.

15. Vorrichtung (1) nach einem der Ansprüche 1 bis 14, **dadurch gekennzeichnet, dass** das Keilträgergehäuse (8) zumindest einen vom Keilträgergehäuse (8) abstehenden Abstützfuß (16), vorzugsweise zwei vom Keilträgergehäuse (8) abstehende Abstützfüße (16), zum Abstützen des Keilträgergehäuses (8) an einer Halterung (17) aufweist.
